# EUROPÄISCHE PATENTSCHRIFT

(11) **EP 2 673 220 B1**
(45) Veröffentlichungstag und Bekanntmachung des Hinweises auf die Patenterteilung: **12.04.2017**
(21) Anmeldenummer: 12712542.5
(22) Anmeldetag: 07.02.2012
(51) Int. Cl.: B65G 1/04

(54) **EINEBENENREGALBEDIENGERÄT ZUM EIN- BZW. AUSLAGERN VON LADEGÜTERN IN EIN BZW. AUS EINEM REGALLAGER**
SINGLE-LEVEL STORAGE AND RETRIEVAL UNIT FOR STORING ARTICLES IN A RACK STORE AND RETRIEVING THEM THEREFROM
APPAREIL DE COMMANDE DE RAYONNAGES À UN NIVEAU POUR ENTRER ET SORTIR DES MARCHANDISES DANS ET HORS D'UN ENTREPÔT À RAYONNAGES

(30) Priorität: 08.02.2011 AT 1652011; 08.07.2011 AT 10042011; 08.07.2011 AT 10062011; 28.09.2011 AT 14052011
(43) Veröffentlichungstag der Anmeldung: 18.12.2013
(73) Patentinhaber: TGW Mechanics GmbH, 4600 Wels (AT)
(72) Erfinder: WOLKERSTORFER, Christoph, A-4600 Wels (AT); ANGLEITNER, Karl, A-4600 Wels (AT)
(74) Vertreter: Burger, Hannes
(86) Internationale Anmeldenummer: PCT/AT2012/050019
(87) Internationale Veröffentlichungsnummer: WO 2012/106747

(56) Entgegenhaltungen:
- EP-A1- 2 404 848
- DE-A1- 1 963 043
- DE-A1- 10 021 694
- DE-U1-202009 012 490

## Beschreibung

Die Erfindung betrifft ein Einebenenregalbediengerät zum Ein- bzw. Auslagern von Ladegütern in ein bzw. aus einem Regallager, welches einen Grundrahmen umfasst und über einen Fahrantrieb entlang einer Führungsbahn in Fahrrichtung bewegbar ist, wobei das Einebenenregalbediengerät mit zumindest einer Verriegelungsvorrichtung ausgestattet ist, welche ein durch einen Stellantrieb relativ zum Grundrahmen verstellbares Verriegelungselement umfasst, um mit einem nahe der Führungsbahn angeordneten, vorzugsweise als stationärer Anschlag ausgebildeten Verriegelungselement zum Blockieren einer Fahrbewegung bzw. Arretieren einer Aufnahmeposition des Einebenenregalbediengerätes in Eingriff gebracht zu werden. Ein solches Einebenenregalbediengerät ist z.B. aus de DE 100 21 694 A1 bekannt. Ferner betrifft die Erfindung eine Hebevorrichtung mit einem Einebenenregalbediengerät, wobei die Hebevorrichtung einen Führungsrahmen und eine an diesem relativ zum Regallager bewegbare Aufnahmevorrichtung zum Transport des Einebenenregalbediengerätes zwischen Regalebenen des Regallagers umfasst. Eine solche Hebevorrichtung ist z.B. aus der DE 20 2009 012 490 U1 bekannt. Außerdem betrifft die Erfindung ein Regallagersystem mit einem Regallager mit benachbart zueinander angeordneten Lagerregalen, zwischen denen sich zumindest eine Regalgasse von einer ersten Regallagerseite zu einer zweiten Regallagerseite erstreckt und welche in übereinander liegenden Regalebenen Stellplätze für Ladegüter aufweisen, und in den Regalebenen entlang der Regalgasse verlaufenden Führungsbahnen und zumindest einem entlang der Führungsbahnen verfahrbaren, autonomen Einebenenregalbediengerät zum Transport der Ladegüter zu den Stellplätzen.

Ein solches Regallagersystem ist auch aus der DE20 2009 012 490 U1 bekannt. Unterschiedliche Ausführungen von Einebenenregalbediengeräten zum Ein- bzw. Auslagern von Ladegütern in ein bzw. aus einem Regallager und Regallagersysteme sind aus der US 2011/0008138 A1, EP 0 647 575 A1, WO 2010/017871 A1 und US 2010/0316469 A1 bekannt. Zudem ist aus der DE 100 21 694 A1 ein Verfahren zum Ein- und Auslagern von Lasten sowie eine Transportvorrichtung zum Einsatz in einem Regallager bekannt. In einer Variante weist die Transportvorrichtung in das Regal eingreifende Kupplungseinrichtungen auf, wodurch die Transportvorrichtung an einem bestimmten Regalplatz verriegelt werden kann. Eine Verriegelungsvorrichtung mit einem relativ zum Grundrahmen verstellbaren Verriegelungselement am Einebenenregalbediengerät, welches mit einem ortsfesten Verriegelungselement am Gassenende einer jeden Regalebene zusammenwirken kann, ist jedoch aus diesem Stand der Technik nicht bekannt.
Der vorliegenden Erfindung liegt die Aufgabe zugrunde, ein Einebenenregalbediengerät zum Ein- bzw. Auslagern von Ladegütern in ein bzw. aus einem Regallager zu schaffen, welches mit einfachen Mitteln einen zuverlässigen Betrieb in einem Regallagersystem und gegebenenfalls an einer Hebevorrichtung erlaubt. Dieses Einebenenregalbediengerät soll mit Vorteil an einer Hebevorrichtung und in einem Regallagersystem einsetzbar sein.

Die Aufgabe der Erfindung wird durch das Einebenenregalbediengerät nach Anspruch 1 gelöst, wobei am Grundrahmen des Einebeneregalbediengeräts eine Anschlagvorrichtung für die Verriegelungsvorrichtung befestigt ist, welche ein erstes Anschlagelement umfasst, wobei die Verriegelungsvorrichtung über eine Lagereinheit relativ zum ersten Anschlagelement in Fahrrichtung verschiebbar am Grundrahmen gelagert ist. Das Einebenenregalbediengerät kann entlang einer Führungsbahn im Regallager und/oder einer Führungsbahn auf einer Hebevorrichtung zum Umsetzen des Einebenenregalbediengerätes zwischen Regalebenen verfahren und an einer ausgewählten Fahrposition entlang der Führungsbahn mit dem an ihm vorgesehenen, verstellbaren ersten Verriegelungselement mit einem nahe der Führungsbahn angeordneten zweiten Verriegelungselement in Eingriff gebracht werden. Dabei kann ein zweites Verriegelungselement in jeder Regalebene an einem der Führungsbahnenden der jeweiligen Führungsbahn oder vorzugsweise jeweils ein zweites Verriegelungselement in jeder Regalebene an den gegenüberliegenden Führungsbahnenden der jeweiligen Führungsbahn angeordnet werden. Das zweite Verriegelungselement kann als stationärer Anschlag einfach und kostengünstig hergestellt werden. Somit braucht bloß die Verriegelungsvorrichtung für das Einebenenregalbediengerät mit einem Stellantrieb ausgestattet werden. Üblicherweise werden im Regallagersystem weniger Einebenenregalbediengeräte als Regalebenen eingesetzt, sodass für eine "Verriegelungs- bzw. Arretierfunktion" sowohl der mechanische Aufwand als auch der Steuerungsaufwand reduziert werden kann.
Es ist auch von Vorteil, wenn die Verriegelungsvorrichtung eine Lagervorrichtung zur Lagerung des Verriegelungselementes umfasst. Das Einebenenregalbediengerät muss üblicherweise relativ schwere Ladegüter und mit hohen Fahrgeschwindigkeiten manipulieren. Soll nun das Einebenenregalbediengerät an einer Fahrposition an einem der Führungsbahnenden in der Fahrbewegung gestoppt werden, läuft das (mobile) erste Verriegelungselement mit entsprechend hoher Geschwindigkeit am (feststehenden) zweiten Verriegelungselement auf. Durch die kompakte Lagerung des Verriegelungselementes zwischen in Fahrrichtung hintereinander angeordneten Führungsblöcken, kann die Aufprallenergie über die robuste Lagervorrichtung aufgenommen werden.

Nach einer Ausbildung der Erfindung umfasst die Verriegelungsvorrichtung eine Führungsvorrichtung zur Führung des Verriegelungselementes, mit welcher eine zuverlässige Führungsfunktion und damit Verstellbewegung für das Verriegelungselement relativ zum Grundrahmen erreicht wird. Dabei ist von Vorteil, wenn die Führungsvorrichtung einen Führungsbolzen und das Verriegelungselement ein mit einer Bohrung versehenes Anschlaggehäuse umfassen, wobei das Anschlaggehäuse durch den Stellantrieb axial verschiebbar auf dem Führungsbolzen gelagert ist. Der Querschnitt des Anschlaggehäuses ist größer als der Querschnitt des Führungsbolzens, sodass hohe Kräfte vom Anschlaggehäuse aufgenommen werden können. Zudem kann durch die Anordnung des Führungsbolzens innerhalb des Anschlaggehäuses, die Verriegelungsvorrichtung sehr kompakt aufgebaut werden und ist auch eine zuverlässige Verstellfunktion des Verriegelungselementes möglich.

Umfasst die Verriegelungsvorrichtung eine Lagereinheit und ist der Führungsbolzen über ein Aufnahmeelement an der Lagereinheit gelagert, kann über in der Höhe einstellbare Stützelemente zwischen dem Aufnahmeelement und der Lagereinheit ein Verstellweg für das Verriegelungselement in Verstellrichtung einfach eingestellt werden. Die Stützelemente sind vorzugsweise am Aufnahmeelement vorgesehen und liegen an der Lagereinheit auf.

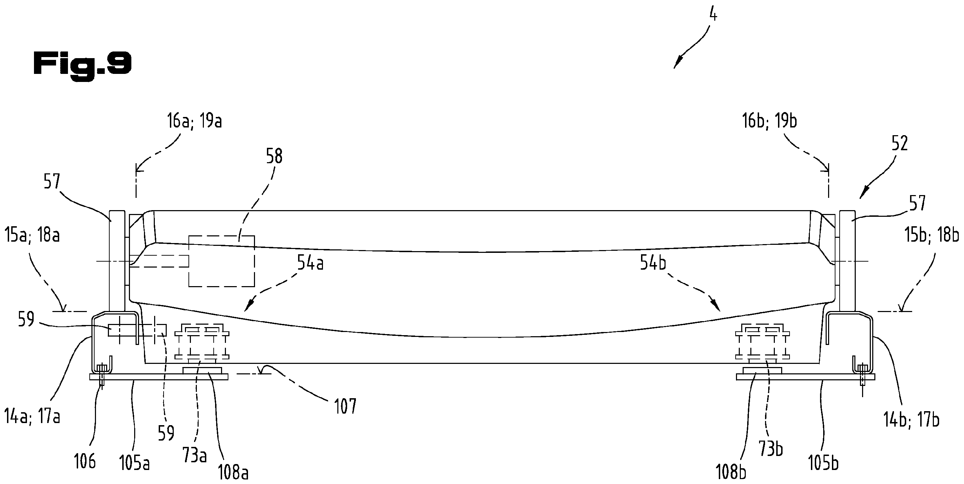

Es ist nach einer anderen Ausführung der Erfindung vorgesehen, dass die Verriegelungsvorrichtung eine Lagereinheit mit einer Stützvorrichtung und das Verriegelungselement ein Trägerelement umfassen, wobei die Stützvorrichtung und das Trägerelement in Verstellrichtung des Verriegelungselementes einander gegenüberliegen und derart ausgebildet sind, dass in einer Verriegelungsstellung des Verriegelungselementes das Trägerelement an der Stützvorrichtung abstützbar ist. Dadurch ist es möglich, dass in einer Verriegelungsstellung für das Verriegelungselement der Stellantrieb nicht betätigt werden muss und das Verriegelungselement zuverlässig in der Verriegelungsstellung gehalten wird. Nur wenn das Einebenenregalbediengerät über das (feststehende) zweite Verriegelungselement hinweg bewegt werden soll (Fig. 9), muss das (mobile) erste Verriegelungselement durch den Stellantrieb in eine Ausgangsstellung angehoben werden. Für die Stellbewegung des Verriegelungselementes ist nur ein kurzer Schaltimpuls, mit dem der Stellantrieb beaufschlagt wird, notwendig, sodass der Energiebedarf für die Ausführung der "Verriegelungs- bzw. Arretierfunktion" gering ist.

Eine vorteilhafte Ausgestaltung der Erfindung liegt auch darin, dass die Anschlagvorrichtung ein zweites Anschlagelement umfasst. Ist bloß ein erstes Anschlagelement vorgesehen, ist die Verriegelungsvorrichtung über eine Lagereinheit relativ zum ersten Anschlagelement verschiebbar am Grundrahmen gelagert. Vorzugsweise umfasst die Anschlagvorrichtung ein erstes Anschlagelement und ein zweites Anschlagelement, und die Verriegelungsvorrichtung ist über eine Lagereinheit zwischen den Anschlagelementen in Fahrrichtung verschiebbar am Grundrahmen gelagert. Wird das Einebenenregalbediengerät an einer Fahrposition in der Fahrbewegung gestoppt, läuft das (mobile) erste Verriegelungselement mit entsprechender Geschwindigkeit am (feststehenden) zweiten Verriegelungselement auf. Sind die Anschlagelemente durch Dämpfungselemente gebildet, kann ein Teil der Aufprallenergie, welche entsteht, wenn das (mobile) erste Verriegelungselement mit entsprechender Geschwindigkeit am (feststehenden) zweiten Verriegelungselement aufläuft, im Dämpfungselement absorbiert werden. Dabei kann die Lagereinheit, an welcher das erste Verriegelungselement gelagert ist, relativ gegenüber dem Grundrahmen verschoben werden. Es sind entweder die Anschlagelemente der Anschlagvorrichtung oder die Anschlagelemente der Verriegelungsvorrichtung aus einem elastisch nachgiebigen Elastomere, insbesondere Gummi, hergestellt. Natürlich können die Anschlagelemente sowohl der Anschlagvorrichtung als auch der Verriegelungsvorrichtung aus einem elastisch nachgiebigen Elastomere, insbesondere Gummi, hergestellt werden.

Eine besonders Platz sparende Anordnung wird erreicht, wenn die Verriegelungsvorrichtung unterhalb einer vom Grundrahmen ausgebildeten Aufnahmeebene für zumindest ein Ladegut angeordnet ist. Darüber hinaus ist die mechanische Belastung auf die Verriegelungsvorrichtung gering. Insbesondere ist ein Drehmoment, welches auf das erste Verriegelungselement wirkt, wenn das erste Verriegelungselement am zweiten Verriegelungselement aufläuft, niedrig, da der Höhenabstand zwischen dem ersten Verriegelungselement und dem zweiten Verriegelungselement klein ist.

Befindet sich das Einebenenregalbediengerät auf der Aufnahmevorrichtung in einer Aufnahmeposition, so kann während der Hubbewegung der Aufnahmevorrichtung das Einebenenregalbediengerät über die miteinander in Eingriff bringbaren Verriegelungselemente in seiner Aufnahmeposition relativ zur Führungsbahn arretiert und gegebenenfalls auf der Aufnahmevorrichtung relativ zur Führungsbahn zentriert werden. Dabei umfasst die Aufnahmevorrichtung zumindest ein zweites Verriegelungselement, welches beispielweise durch eine komplementär zum ersten Verriegelungselement ausgebildete Aufnahmebohrung oder durch in Fahrrichtung des Einebenenregalbediengerätes mit gegenseitigem Abstand angeordnete Arretiernocken gebildet ist, sodass ein formschlüssiger Eingriff zwischen den Verriegelungselementen möglich ist.

Zum besseren Verständnis der Erfindung wird diese anhand der nachfolgenden Figuren näher erläutert.

Es zeigen jeweils in stark schematisch vereinfachter Darstellung:
- Fig. 1: ein Regallagersystems mit einer Detailansicht auf die erste Regallagerseite, in perspektivischer Ansicht;
- Fig. 2: einen Ausschnitt des Regallagersystems nach Fig. 1 mit einer Detailansicht auf die zweite Regallagerseite, in perspektivischer Ansicht;
- Fig. 3: eine Ansicht auf die Förderfahrzeug-Hebevorrichtung, in perspektivischer Ansicht;
- Fig. 4: ein Ausführungsbeispiel für ein Förderfahrzeug des Regallagersystems nach Fig. 1, in perspektivischer Ansicht;
- Fig. 5: eine Anschlagvorrichtung und Verriegelungsvorrichtung für das Förderfahrzeug als Explosionsdarstellung;
- Fig. 6: einen Längsschnitt durch die Verriegelungsvorrichtung mit einem Verriegelungselement in einer Ausgangsstellung, gemäß den Linien VII - VII in Fig. 4;
- Fig. 7: einen Längsschnitt durch die Verriegelungsvorrichtung mit einem Verriegelungselement in einer Verriegelungsstellung, gemäß den Linien VII - VII in Fig. 4;
- Fig. 8: eine Stirnansicht auf das Förderfahrzeug mit den Verriegelungselementen in der Verriegelungsstellung;
- Fig. 9: eine Stirnansicht auf das Förderfahrzeug mit den Verriegelungselementen in der Ausgangsstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

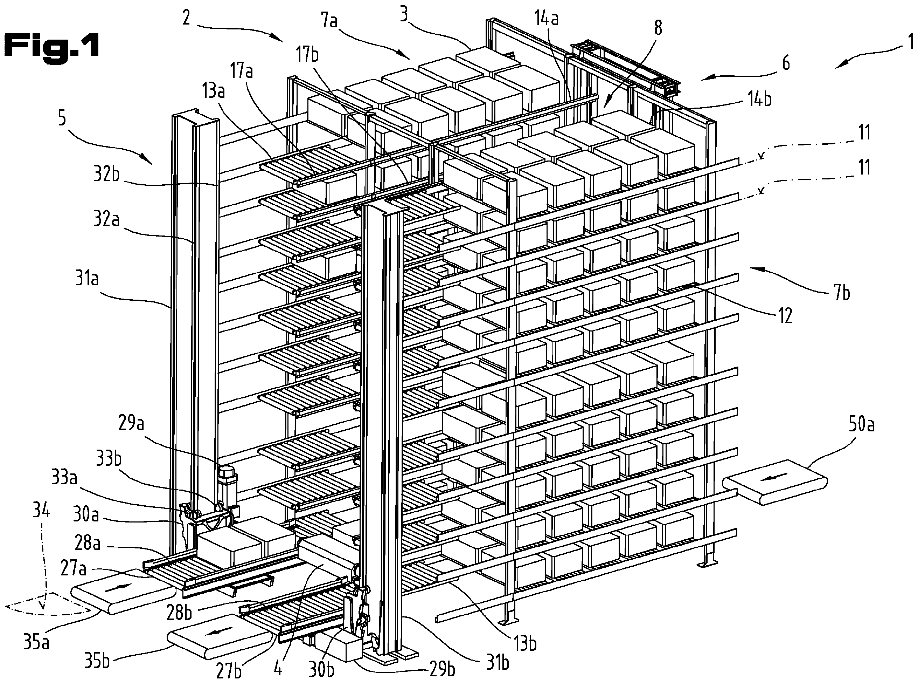

In den Fig. 1 bis 3 ist ein Regallagersystem 1 gezeigt, welches ein Regallager 2 für Ladegüter 3, zumindest ein selbstfahrendes, autonomes Förderfahrzeug 4, eine Ladegut-Hebevorrichtung 5 und eine Förderfahrzeug-Hebevorrichtung 6 umfasst. Das Förderfahrzeug 4 ist ein Einebenenregalbediengerät (Shuttle). Das Regallager 2 weist in einem Abstand parallel angeordnete Lagerregale 7a, 7b auf, zwischen denen sich eine Regalgasse 8 ausgehend von einer ersten Regallagerseite 9 zu einer zweiten Regallagerseite 10 erstreckt und welche in übereinander liegenden Regalebenen 11 jeweils nebeneinander vorgesehene Stellplätze 12 für die Ladegüter 3 ausbilden. Nach gezeigter Ausführung bilden die Lagerregale 7a, 7b in den Regalebenen 11 jeweils nebeneinander und hintereinander vorgesehene Stellplätze 12 für die Ladegüter 3 aus, sodass in Tiefenrichtung der Lagerregale 7a, 7b zwei Ladegüter 3 abgestellt werden können, daher eine so genannte "doppelttiefe" Lagerung möglich ist. Andererseits ist es auch möglich, dass die Lagerregale 7a, 7b in den Regalebenen 11 jeweils ausschließlich in einer Reihe nebeneinander vorgesehene Stellplätze 12 für die Ladegüter 3 ausbilden, sodass in Tiefenrichtung der Lagerregale 7a, 7b nur ein Ladegut 3 abgestellt werden kann, daher eine so genannte "einfachtiefe" Lagerung möglich ist.

Wie in Fig. 1 ersichtlich, kann das Regallagersystem 1 auf der ersten Regallagerseite 9 zusätzlich eine Pufferzone umfassen, die jeweils den Regalebenen 11 der Lagerregale 7a, 7b vorgelagert in einer Reihe Pufferplätze 13a, 13b für zumindest ein Ladegut 3 aufweist. Die Pufferplätze 13a, 13b sind jeweils auf einer antreibbaren Förderbahn, beispielsweise einer Transportvorrichtung, wie Staurollenbahn, Staugurtförderer und dgl. gebildet, dessen Förderrichtung parallel zur Regalgasse 8 verläuft.

In jeder Regalebene 11 erstrecken sich entlang der Regalgasse 8 zumindest von der ersten Regallagerseite 9 bis über die zweite Regallagerseite 10 hinweg erste Führungsschienen 14a, 14b, entlang deren das Förderfahrzeug 4 geführt bewegbar ist, um Ladegüter 3, wie beispielsweise Behälter, Kartonagen, Tablare und dgl. zu den in den Regalebenen 11 der Lagerregale 7a, 7b jeweils vorgesehenen Stellplätzen 12 anzutransportieren und von den in den Regalebenen 11 der Lagerregale 7a, 7b jeweils vorgesehenen Stellplätzen 12 abzutransportieren. Die in der jeweiligen Regalebene 11 einander gegenüberliegenden Führungsschienen 14a, 14b bilden jeweils eine erste Führungsbahn.

Die horizontalen ersten Führungsschienen 14a, 14b sind in den Regalebenen 11 jeweils an den Lagerregalen 7a, 7b befestigt und bilden je eine Höhenführungsbahn 15a, 15b und zumindest eine der Führungsschienen 14a, 14b eine Seitenführungsbahn 16a, 16b aus.

Sind die Pufferplätze 13a, 13b vor jedem Lagerregal 7a, 7b zu beiden Seiten der Regalgasse 8 vorgesehen, sind auch in der ersten Vorzone des Regallagers 2 in jeder Regalebene 11 unmittelbar in der Verlängerung der ersten Führungsschienen 14a, 14b im Regallager 2 zweite Führungsschienen 17a, 17b vorgesehen, sodass das Förderfahrzeug 4 auch zwischen den, auf Höhe der Regalebenen 11 einander gegenüberliegenden Pufferplätzen 13a, 13b geführt bewegbar ist, um Ladegüter 3 zu den in den Regalebenen 11 der Lagerregale 7a, 7b jeweils vorgesehenen Pufferplätzen 13a, 13b anzutransportieren und von den in den Regalebenen 11 der Lagerregale 7a, 7b jeweils vorgesehenen Pufferplätzen 13a, 13b abzutransportieren. Die in der jeweiligen Regalebene 11 einander gegenüberliegenden Führungsschienen 17a, 17b bilden jeweils eine zweite Führungsbahn.

Die zweiten Führungsschienen 17a, 17b sind in den Regalebenen 11 jeweils an den Transportvorrichtungen in der Pufferzone befestigt und bilden je eine Höhenführungsbahn 18a, 18b und zumindest eine der Führungsschienen 17a, 17b eine Seitenführungsbahn 19a, 19b aus.

Die Führungsschienen 14a, 14b; 17a, 17b sind beispielsweise U-Profile, C-Profile und dgl.

Auf der ersten Regallagerseite 9 ist stirnseitig vor dem Regallager 2 die Ladegut-Hebevorrichtung 5 angeordnet, welche nach gezeigter Ausführung unabhängig voneinander heb- und senkbare Aufnahmevorrichtungen 27a, 27b für Stückgüter 3 aufweist.

Die Aufnahmevorrichtungen 27a, 27b umfassen jeweils eine Transportvorrichtung 28a, 28b mit einer sich parallel zur Regalgasse 8 erstreckenden Förderrichtung, wobei die erste Transportvorrichtung 28a auf einem über einen ersten Hubantrieb 29a vertikal verstellbaren Hubrahmen 30a und eine zweite Transportvorrichtung 28b auf einem über einen zweiten Hubantrieb 29b vertikal verstellbaren Hubrahmen 30b aufgebaut sind.

Nach gezeigter Ausführung ist die erste Transportvorrichtung 28a über den Hubrahmen 30a auf einem ersten Mast 31 a und die zweite Transportvorrichtung 28b über den Hubrahmen 30b auf einem zweiten Mast 31b gelagert. Der Mast 31a, 31b ist mit Führungen 32a, 32b versehen, auf welchen die Hubrahmen 30a, 30b mit Führungsrädern 33a, 33b abrollbar aufliegen.

Die Transportvorrichtungen 28a, 28b sind unabhängig (entkoppelt) voneinander zwischen den Regalebenen 11 und auf das Höhenniveau einer jeden Regalebene 11 sowie auf das Höhenniveau einer Fördertechnikebene 34 verstellbar, sodass Ladegüter 3, wie beispielsweise Behälter, Kartonagen, Tablare und dgl., zwischen den Transportvorrichtungen 28a, 28b und Pufferplätzen 13a, 13b sowie zwischen den Transportvorrichtungen 28a, 28b und einer ersten Vorzonen-Fördertechnik gefördert werden können. Vorzugsweise sind die Transportvorrichtungen 28a, 28b jeweils durch eine antreibbare Förderbahn, wie eine Staurollenbahn, Staugurtförderer und dgl. gebildet. Es erweist sich auch von Vorteil, wenn die Transportvorrichtungen 28a, 28b in Förderrichtung hintereinander mehrere Ladegüter 3, vorzugsweise bis zu vier Ladegüter 3 aufnehmen können.

Die erste Vorzonen-Fördertechnik schließt an die Ladegut-Hebevorrichtung 5 an und umfasst eine erste Fördervorrichtung 35a und eine zweite Fördervorrichtung 35b, welche mit gegenseitigem Abstand parallel zueinander verlaufen. Hierbei werden über die erste Fördervorrichtung 35a Ladegüter 3 von der ersten Vorzonen-Fördertechnik zur Ladegut-Hebevorrichtung 5 angefördert und über die zweite Fördervorrichtung 35b Ladegüter 3 von der Ladegut-Hebevorrichtung 5 zur ersten Vorzonen-Fördertechnik abgefördert.

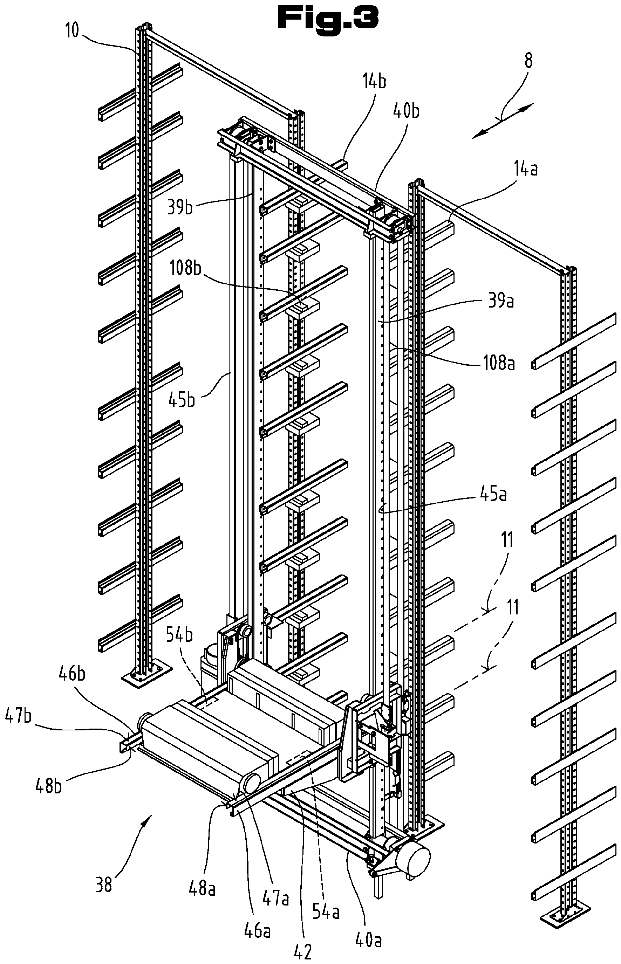

Auf der zweiten Regallagerseite 10 ist stirnseitig vor dem Regallager 2 die Förderfahrzeug-Hebevorrichtung 6 (Umsetzvorrichtung) angeordnet. Die Förderfahrzeug-Hebevorrichtung 6 umfasst einen Führungsrahmen 36, einen Hubrahmen 37 und eine heb- und senkbare Aufnahmevorrichtung 38 für das Förderfahrzeug 4 (Fig. 3).

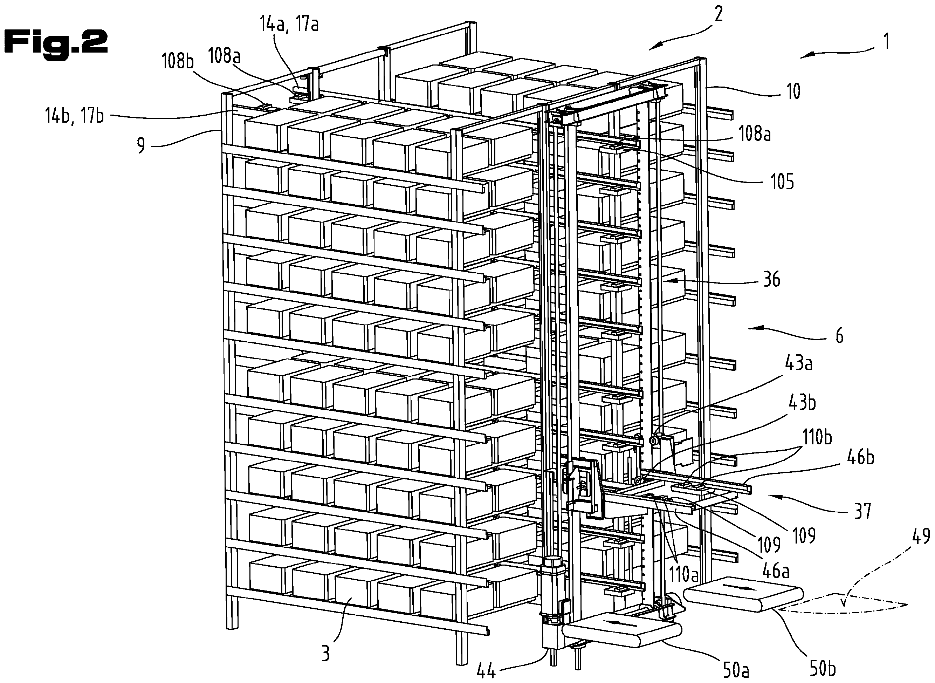

Der Führungsrahmen 36, wie in den Fig. 2 und 3 näher ersichtlich, weist zu beiden Seiten der Regalgasse 8 angeordnete, vertikale Rahmenteile 39a, 39b, eine diese miteinander verbindende und unterhalb der untersten Regalebene 11 verlaufende untere Traverse 40a sowie eine diese miteinander verbindende und oberhalb der obersten Regalebene 11 verlaufende obere Traverse 40b. Die Rahmenteile 39a, 39b umfassen Führungsbahnen für Führungsorgane 43, 43b und sind erste Formprofile, beispielsweise U-Profile, C-Profile oder in sich geschlossene Rohrprofile mit im Wesentlichen rechteckigem oder trapezförmigem Querschnitt. Die Traversen 40a, 40b sind durch mit gegenseitigem Abstand quer zur Regalgasse 8 verlaufende zweite Formprofile, beispielsweise U-Profile, C-Profile oder in sich geschlossene Rohrprofile mit im Wesentlichen rechteckigem oder trapezförmigem Querschnitt gebildet. Der Abstand ist so gewählt, dass zwischen den einander zugewandten Seitenflächen der zweiten Formprofile der Traversen 40a, 40b die ersten Formprofile der Rahmenteile 39a, 39b aufgenommen werden können. Die Rahmenteile 39a, 39b bzw. ersten Formprofile und die Traversen 40a, 40b bzw. zweiten Formprofile sind über Verbindungselemente entweder lösbar oder über Fügeverbindungen dauerhaft zum formstabilen, verwindungssteifen Führungsrahmen 36 verbunden.

Wie in den Fig. ersichtlich, bilden die Rahmenteile 39a, 39b jeweils einen Hubführungsabschnitt für den Hubrahmen 37 aus. Auch können die die Rahmenteile 39a, 39b jeweils einen Anbindungsabschnitt für die Befestigung der Führungsschienen 14a, 14b des Regallagers 2 ausbilden.

Der Hubrahmen 37 umfasst ein Aufnahmegestell 42 und an diesem gelagerte Führungsorgane 43a, 43b, mit welchen sich der Hubrahmen 37 auf den Führungsbahnen abstützt. Bevorzugt sind die Führungsorgane 43a, 43b durch Führungsräder gebildet, welche an den Führungsbahnen abrollbar aufliegen.

Der Hubrahmen 37 ist mit einer Verstellvorrichtung gekoppelt, welche nach gezeigtem Ausführungsbeispiel am Führungsrahmen 36 gelagerte Zugmitteltriebe und zumindest einen Hubantrieb 44 umfasst. Die Zugmitteltriebe umfassen synchron angetriebene, endlos umlaufende Zugmittel 45a, 45b, welche jeweils um ein (oberes) Umlenkrad und ein mit dem Hubantrieb 44 gekuppeltes (unteres) Antriebsrad geführt sind. Das Zugmittel 45a, 45b ist beispielsweise durch einen Zahnriemen, eine Kette oder dgl. gebildet. Der Hubantrieb 44 ist bevorzugt durch einen Elektromotor, insbesondere einen Asynchronmotor, Synchronmotor und dgl., gebildet und am Führungsrahmen 36 gelagert. Durch Drehbewegung der Antriebsräder wird der Hubrahmen 37 und die auf diesem angeordnete Aufnahmevorrichtung 36 relativ zu den Regalebenen 11 in vertikaler Richtung (y-Richtung) bis zu einer von einem Rechnersystem festgelegten y-Position bewegt.

Die Aufnahmevorrichtung 38 umfasst parallel zur Regalgasse 8 (x-Richtung) mit gegenseitigem Abstand horizontal erstreckende Führungsschienen 46a, 46b, die auf dem über den Hubantrieb 44 vertikal verstellbaren Hubrahmen 37 befestigt sind und jeweils eine Höhenführungsbahn 47a, 47b und Seitenführungsbahn 48a, 48b ausbilden. Die Führungsschienen 46a, 46b sind beispielsweise U-Profile, C-Profile und dgl. gebildet. Das Förderfahrzeug 4 kann über Fahrräder entlang der Höhenführungsbahnen 47a, 47b rollend bewegt werden. Zur Seitenführung des Förderfahrzeuges 4 dienen Seitenführungsorgane, beispielweise Seitenführungsrollen. Die einander gegenüberliegenden Führungsschienen 46a, 46b bilden eine (mobile) dritte Führungsbahn.

Die Aufnahmevorrichtung 38 kann zwischen den Regalebenen 11 auf das Höhenniveau einer jeden Regalebene 11 und auf das Höhenniveau einer Fördertechnikebene 49 verstellt werden, sodass Ladegüter 3 auch zwischen der Aufnahmevorrichtung 38 und einer zweiten Vorzonen-Fördertechnik gefördert werden können.

Die zweite Vorzonen-Fördertechnik schließt an die Förderfahrzeug-Hebevorrichtung 6 an und umfasst eine erste Fördervorrichtung 50a und eine zweite Fördervorrichtung 50b, welche mit gegenseitigem Abstand parallel zueinander verlaufen. Die stationären Fördervorrichtungen 50a, 50b sind jeweils durch eine antreibbare Fördervorrichtung, beispielsweise einen Rollenförderer, Gurtförderer und dgl. gebildet. Hierbei werden über die erste Fördervorrichtung 50a Ladegüter 3 von der zweiten Vorzonen-Fördertechnik zur Förderfahrzeug-Hebevorrichtung 6 angefördert und über die zweite Fördervorrichtung 50b Ladegüter 3 von der Förderfahrzeug-Hebevorrichtung 6 zur zweiten Vorzonen-Fördertechnik abgefördert.

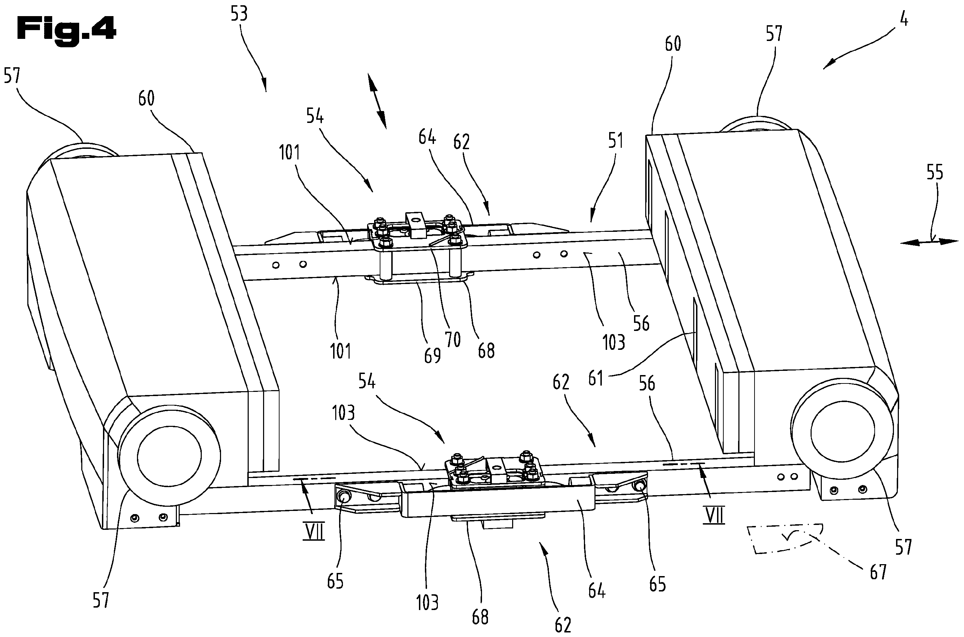

In Fig. 4, 8 und 9 ist das Förderfahrzeug 4 näher dargestellt, welches als Einebenenregalbediengerät ausgebildet ist. Dieses umfasst einen Grundrahmen 51, einen Fahrantrieb 52 und eine Lastaufnahmevorrichtung 53 zum Ein- bzw. Auslagern von Ladegütern 3 in ein bzw. aus einem Regallager 2 sowie Verriegelungsvorrichtungen 54.

Der Grundrahmen 51 umfasst mit gegenseitigem Abstand parallel in Fahrrichtung 55 verlaufende Längsträger 56 und diese verbindende (nicht dargestellte) Querträger sowie eine auf der Oberseite der Längsträger 56 angeordnete (nicht dargestellte) Plattform zur Aufnahme zumindest eines Ladegutes 3. Der Längsträger 56 ist beispielweise ein offenes Profil mit C-förmigen Querschnitt oder geschlossenes Profil (Formrohr) mit mehreckigem Querschnitt.

Der Fahrantrieb 52 umfasst auf jeder Seite des Förderfahrzeuges 4 am Grundrahmen 51 drehbar gelagerte Laufräder 57 und zumindest einen Antriebsmotor 58. Der Antriebsmotor 58 ist vorzugsweise ein Elektromotor. Es können über den Antriebsmotor 58 entweder alle Laufräder 57 oder auf jeder Seite des Förderfahrzeuges 4 nur eines der Laufräder 57 angetrieben werden.

Sind alle Laufräder 57 (Allradantrieb) angetrieben, so sind die Laufräder 57 auf der ersten Seite des Förderfahrzeuges 4 mit einem Zugmitteltrieb verbunden, welcher mit dem Antriebsmotor 58 gekoppelt ist. Die Laufräder auf der zweiten Seite des Förderfahrzeuges 4 sind über Antriebswellen mit den Laufrädern der ersten Seite des Förderfahrzeuges 4 verbunden. Andererseits können die Laufräder auf der ersten Seite des Förderfahrzeuges 4 mit einem ersten Zugmitteltrieb verbunden und die Laufräder auf der zweiten Seite des Förderfahrzeuges 4 mit einem zweiten Zugmitteltrieb verbunden sein, wobei jeder Zugmitteltrieb mit einem eigenen Antriebsmotor gekoppelt ist. Die Antriebsmotoren sind in diesem Fall elektrisch synchronisiert.

Ist auf der ersten Seite des Förderfahrzeuges 4 nur eines der Laufräder 57 und auf der zweiten Seite des Förderfahrzeuges 4 nur eines der Laufräder 57 angetrieben, so sind diese jeweils mit einem Antriebsmotor gekoppelt. Die Antriebsmotoren sind in diesem Fall elektrisch synchronisiert.

Das Förderfahrzeug 4 kann zum Ein- bzw. Auslagern von Ladegütern 3 in das bzw. aus dem Regallager 2 über den Fahrantrieb 52 entlang der Regalgasse 8 in Fahrrichtung 55 (X-Richtung) auf der ersten Führungsbahn bewegt werden, wobei die Laufräder 57 auf den Höhenführungsbahnen 15a, 15b abrollbar aufliegen.

Ist auch die Pufferzone vorgesehen, so kann das Förderfahrzeug 4 zum Ein- bzw. Auslagern von Ladegütern 3 in das bzw. aus dem Regallager 2 über den Fahrantrieb 52 entlang der Regalgasse 8 in Fahrrichtung 55 (X-Richtung) auf der zweiten Führungsbahn bewegt werden, wobei die Laufräder 57 auf den Höhenführungsbahnen 18a, 18b abrollbar aufliegen.

Soll ein Förderfahrzeug 4 zwischen einer ersten Regalebene 11 und zweiten Regalebene 11 umgesetzt werden, so kann das Förderfahrzeug 4 über den Fahrantrieb 52 in Fahrrichtung 55 (X-Richtung) zwischen der Regalgasse 8 und der Aufnahmevorrichtung 38 entlang der ersten Führungsbahn und der dritten Führungsbahn bewegt werden, wobei die Laufräder 57 auf den Höhenführungsbahnen 15a, 15b, 47a, 47b abrollbar aufliegen.

Ebenso ist das Förderfahrzeug 4 auf zumindest einer Seite mit einer Seitenführungsvorrichtung versehen, welche beispielweise Führungsrollen 59 umfasst. Das Förderfahrzeug 4 wird während der Fahrbewegung in Fahrrichtung 55 (X-Richtung) mittels der Seitenführungsvorrichtung entlang der ersten/zweiten/dritten Führungsbahn seitlich geführt. Dabei liegen die Führungsrollen 59 gegen die Seitenführungsbahn 16; 19; 48 abrollbar an.

Die Lastaufnahmevorrichtung 53 zur Einlagerung/Auslagerung/Umlagerung von einem oder gleichzeitig zwei Ladegütern 3 ist am Grundrahmen 51 angeordnet. Diese umfasst nach gezeigter Ausführung in Z-Richtung synchron ausfahrbare Teleskoparme 60 und jeweils an diesen angeordnete Mitnehmer 61. Eine solche Lastaufnahmevorrichtung 53 ist beispielsweise aus der US 2005/0095095 A1 oder EP 0 647 575 A1 bekannt, und kann aufgrund der kompakten Bauweise der Teleskoparme 60 und der zuverlässigen Funktionsweise mit Vorteil eingesetzt werden.

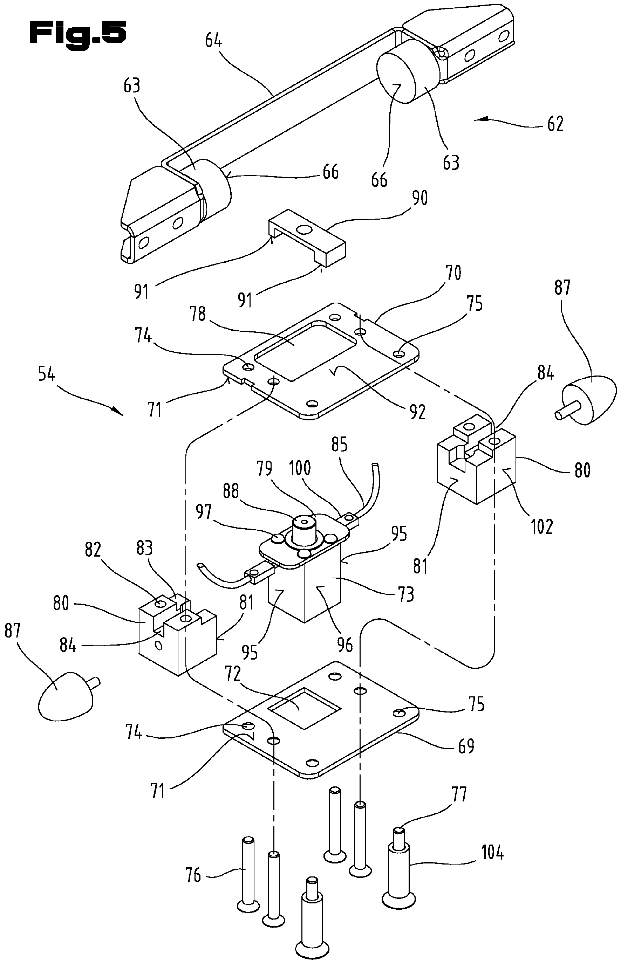

Wie in den Fig. 4 und 5 ersichtlich, ist es von Vorteil, wenn das Förderfahrzeug 4 auch eine am Grundrahmen 51 angeordnete Anschlagvorrichtung 62 umfasst.

Die Anschlagvorrichtung 62 umfasst einander koaxial gegenüberliegende Anschlagelemente 63. Die Anschlagelemente 63 sind an einem Haltebügel 64 angeordnet, welcher über Befestigungsmittel 65 mit dem Grundrahmen 51 verbunden ist. Die Befestigungsmittel 65 sind beispielweise Schrauben, Nieten und dgl. Die Anschlagelemente 63 bilden stirnseitige und einander zugewandte Anschlagflächen 66 aus und sind aus elastisch nachgiebigem Elastomere, insbesondere Gummi, hergestellte Dämpfungselemente. Der Längsabstand zwischen den Anschlagflächen 66 der Anschlagelemente 63 ist so bemessen, dass zwischen diesen die Verriegelungsvorrichtung 54 aufgenommen werden kann.

Die Verriegelungsvorrichtungen 54 werden nun anhand der Fig. 3 bis 9 beschrieben. Diese sind gemäß gezeigter Ausführung am Grundrahmen 51 auf der ersten (linken) Seite des Förderfahrzeuges 4 und auf der zweiten (rechten) Seite des Förderfahrzeuges 4 unterhalb einer Aufnahmeebene 67 angeordnet. Die Aufnahmeebene 67 wird von der (nicht dargestellten) Plattform ausgebildet. Andererseits können die Verriegelungsvorrichtungen 54 auch am Grundrahmen 51 auf der Frontseite des Förderfahrzeuges 4 und auf der Heckseite des Förderfahrzeuges 4 angeordnet werden. Auch ist es möglich, dass eine einzige Verriegelungsvorrichtung 54 vorgesehen ist, welche am Grundrahmen 51 auf der ersten Seite, zweiten Seite, Frontseite oder Heckseite des Förderfahrzeuges 4 angeordnet ist. Sind zwei Verriegelungsvorrichtungen 54 vorgesehen, so sind deren noch näher zu beschreibenden Verriegelungselemente 73 über die Stellantriebe 98 vorzugsweise synchron verstellbar.

Die Verriegelungsvorrichtung 54 umfasst eine Lagereinheit 68, über welche die Verriegelungsvorrichtung 54 zwischen den Anschlagelementen 63 axial verschiebbar am Grundrahmen 51 gelagert ist.

Die Lagereinheit 68, wie sie in Fig. 5 dargestellt ist, umfasst eine erste Montageplatte 69 und eine zweite Montageplatte 70, welche mit gegenseitigem Abstand vertikal übereinander verlaufen und an ihren einander zugewandten Seitenwänden Führungsflächen 71 ausbilden. Der Abstand ist dabei so gewählt, dass der Längsträger 56 zwischen den Führungsflächen 71 angeordnet werden kann. In der ersten Montageplatte 69 ist eine fensterartige Ausnehmung 72 vorgesehen, durch welche ein noch näher zu beschreibendes Verriegelungselement 73 hindurchgeführt wird. Zusätzlich sind Bohrungen 74, 75 für Befestigungsmittel 76, 77, insbesondere Schrauben vorgesehen. In der zweiten Montageplatte 70 ist ebenfalls eine fensterartige Ausnehmung 78 vorgesehen, durch welche eine noch näher zu beschreibende Trägerplatte bzw. ein Trägerelement 79 hindurchgeführt wird. Zusätzlich sind Bohrungen 74, 75 für Befestigungsmittel 76, 77, insbesondere Schrauben vorgesehen.

Die Verriegelungsvorrichtung 54 umfasst ferner eine Lagervorrichtung zur Lagerung des Verriegelungselementes 73.

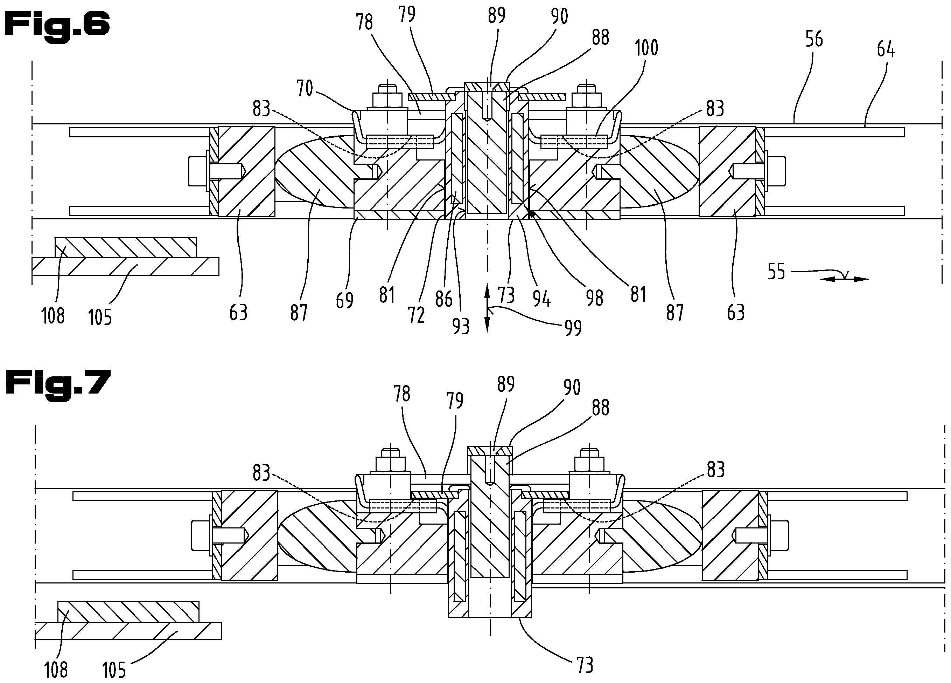

Das Verriegelungselement 73 ist in einer zur Aufnahmeebene 67 des Grundrahmens 51 senkrechten Verstellrichtung 99 zwischen einer Ausgangsstellung (Fig. 6) und einer Verriegelungsstellung (Fig. 7) verstellbar. Die Lagervorrichtung weist einen ersten Führungsblock 80 und einen zweiten Führungsblock 80 auf, welche mit gegenseitigem Abstand einander gegenüberliegen und an ihren einander zugewandten Seitenwänden Führungsflächen 81 ausbilden. In den Führungsblöcken 80 sind Bohrungen 82 für Befestigungsmittel 76, insbesondere Schrauben vorgesehen. Ferner sind die Führungsblöcken 80 an ihren der zweiten Montageplatte 70 zugewandten Seitenwänden mit einer Stützvorrichtung, insbesondere Auflageschultern 83 ausgebildet. Die Auflageschultern 83 bilden die Stützvorrichtung an der Lagereinheit 68, an welcher das Verriegelungselement 73 über die Trägerplatte 79 aufliegen kann, wenn der noch näher zu beschreibende Stellantrieb nicht betätigt ist. Die Führungsblöcke 80 können auch an ihren der zweiten Montageplatte 70 zugewandten Seitenwänden mit einem Kanal 84 ausgebildet werden, welche der Unterbringung von Anschlussdrähten 85 einer Spule 86 (Fig. 6, 7) und/oder Klemmen 100 dienen. Die Führungsblöcke 80 werden mit der ersten Montageplatte 69 und zweiten Montageplatte 70 mittels der Befestigungsmittel 76 vorzugsweise lösbar verbunden.

Die Verriegelungsvorrichtung 54 kann auch einander koaxial gegenüberliegende Anschlagelemente 87 umfassen. Die Anschlagelemente 87 sind an den Führungsblöcken 80 befestigt, beispielweise über eine Steckverbindung. Die Anschlagelemente 87 bilden stirnseitige und einander abgewandte Anschlagflächen aus und sind aus elastisch nachgiebigem Elastomere, insbesondere Gummi, hergestellte Dämpfungselemente. Der Längsabstand zwischen den Anschlagflächen der Anschlagelemente 87 ist so bemessen, dass die Anschlagelemente 87 der Verriegelungsvorrichtung 54 zwischen den Anschlagelemente 63 der Anschlagvorrichtung 62 aufgenommen werden können.

Die Verriegelungsvorrichtung 54 kann auch eine Führungsvorrichtung zur Führung des Verriegelungselementes 73 umfassen, die durch einen senkrecht zur Aufnahmeebene 67 verlaufenden, zylindrischen Führungsbolzen 88 gebildet ist. Der Führungsbolzen 88 ragt in die Ausnehmung 78 vor und ist über ein Befestigungsmittel 89, beispielweise eine Schraube und dgl. mit einem Aufnahmeelement 90 verbunden. Das Aufnahmeelement 90 ist als Aufnahmetraverse ausgebildet, welche die Ausnehmung 78 überspannt und mit Auflageflächen 91 an der Oberseite 92 der zweiten Montageplatte 70 abstützbar ist. Das Aufnahmeelement 90 umfasst eine Basis und an dieser vorragende Stützarme, wobei die Stützarme an ihren Stirnseiten die Auflageflächen 91 ausbilden. Nach einer vorteilhaften Ausführung, liegt das Aufnahmeelement 90 an der Oberseite 92 der zweiten Montageplatte 70 gleitend auf und ist nicht mit letzterer verbunden. Dadurch ist eine Relativbewegung zwischen dem Verriegelungselement 73 und der Lagereinheit 68 möglich.

Das Verriegelungselement 73 umfasst, wie in den Fig. 5 bis 7 ersichtlich, ein mit einer Bohrung 93 versehenes längliches Anschlaggehäuse 94 mit mehreckigem, insbesondere rechteckigem oder quadratischem Querschnitt. Die einander gegenüberliegenden ersten Seitenwände des Anschlaggehäuses 94 bilden den Führungsblöcken 80 zugewandte erste Führungsflächen 95 aus. Zusätzlich kann das Anschlaggehäuse 94 an einander gegenüberliegenden zweiten Seitenwänden zweite Führungsflächen 96 ausbilden. Das Anschlaggehäuse 94 ist zwischen den Führungsblöcken 80 angeordnet und durchragt mit seinem ersten (unteren) Ende die fensterartige Ausnehmung 72 in der ersten Montageplatte 69, sodass dieses mit den ersten Führungsflächen 95 an den Führungsblöcken 80 und gegebenenfalls mit den zweiten Führungsflächen 96 an den Längsrändern der Ausnehmung 72 geführt ist. Der Querschnitt der fensterartigen Ausnehmung 72 ist nur geringfügig größer bemessen als der Querschnitt des Anschlaggehäuses 94. Das Verriegelungselement 73 mit der Trägerplatte 79 und dem Aufnahmegehäuse 94 ist mittels des Führungsbolzens 88 an dem Aufnahmeelement 90 gelagert.

Wie in den Fig. 5 bis 7 ersichtlich, liegt die Trägerplatte 79 am zweiten (oberen) Ende des Anschlaggehäuses 94 auf und werden über Befestigungsmittel 97, beispielweise Schrauben und dgl. miteinander verbunden. In der Trägerplatte 79 ist eine Bohrung vorgesehen, welche von dem Führungsbolzen 88 durchragt wird.

Das Anschlaggehäuse 94 ist über einen Stellantrieb 98 zwischen einer Ausgangsstellung (Fig. 6) und einer Verriegelungsstellung (Fig. 7) verstellbar an der Lagereinheit 68 angeordnet. Die Steuersignale für den Stellantrieb 98 werden von einer nicht dargestellten Steuerungsvorrichtung drahtlos per Funk oder kontaktbehaftet über eine, an einer der Führungsschienen 14a, 14b, 17a, 17b, 46a, 46b angeordnete Schleifleitung übertragen. Der Stellantrieb 98 ist im Aufnahmegehäuse 94 integriert angeordnet. Dabei wird das Anschlaggehäuse 94 vorzugsweise in einer zur Aufnahmeebene 67 des Grundrahmens 51 senkrecht verlaufenden Verstellrichtung 99 bewegt. Der Stellantrieb 98 ist nach gezeigter Ausführung durch einen elektrischen Stellantrieb gebildet und umfasst zumindest eine stromdurchflossene Spule 86. Die Spule 86 ist in einer im Anschlaggehäuse 94 ausgebildeten Ausnehmung angeordnet und in dieser fixiert gehalten. Die Drahtenden bzw. Anschlussdrähte 85 werden aus dem Anschlaggehäuse 94 nahe dem zweiten (oberen) Ende herausgeführt. Es ist von Vorteil, wenn die aus dem Anschlaggehäuse 94 herausgeführten Drahtabschnitte mit einer Klemme 100 am Führungsblock 80 fixiert werden.

Der Führungsbolzen 88 enthält ferromagnetisches Material oder ist aus ferromagnetischem Material und ist die Spule 86 koaxial um den Führungsbolzen 88 angeordnet. Das Anschlaggehäuse 94 enthält ferromagnetisches Material oder ist aus ferromagnetischem Material hergestellt. Wird die Spule 86 mit Strom beaufschlagt (daher der Stellantrieb 98 betätigt) wird das Verriegelungselement 73 bzw. das Aufnahmegehäuse 94 magnetisiert und auf dem feststehenden Führungsbolzen 88 axial nach oben in die Ausgangsstellung (Fig. 6) bewegt. Ist die Spule 86 stromlos (daher der Stellantrieb 98 nicht betätigt), so wird das Verriegelungselement 73 bzw. das Aufnahmegehäuse 94 alleinig aufgrund der Gewichtskraft auf dem feststehenden Führungsbolzen 88 axial nach unten in die Verriegelungsstellung (Fig. 7) bewegt. Natürlich kann auch ein Federelement vorgesehen werden, dessen Federkraft in Richtung der Verriegelungsstellung wirkt, sodass das Verriegelungselement 73 bzw. das Aufnahmegehäuse 94 mittels einer Federkraft beaufschlagt, in der Verriegelungsstellung gehalten wird.

Wie in Fig. 7 ersichtlich, ist das Verriegelungselement 73 bzw. das Aufnahmegehäuse 94 in der Verriegelungsstellung über das Trägerelement, insbesondere die Trägerplatte 79 an der Stützvorrichtung, insbesondere den Auflageschultern 83 der Führungsblöcke 80 abgestützt. Wird das Verriegelungselement 73 bzw. das Aufnahmegehäuse 94 in die Ausgangsstellung bewegt, wird die Trägerplatte 79 von den Auflageschultern 83 der Führungsblöcke 80 abgehoben und entlang des Führungsbolzens 88 verschoben.

Wenngleich der elektromagnetische Stellantrieb 98 die bevorzugte Ausführung ist, ist es genauso gut möglich, dass der Stellantrieb 98 ein mechanischer oder elektromechanischer oder fluidischer (pneumatischer oder hydraulischer) Stellantrieb ist.

Die beschriebene Lagereinheit 68 bildet eine modular aufgebaute Baueinheit aus und umfasst die erste Montageplatte 69, die zweite Montageplatte 70, das Verriegelungselement 73, die Führungsvorrichtung für das Verriegelungselement 73 und die Lagervorrichtung für das Verriegelungselement 73 sowie den Stellantrieb 98 für die Betätigung des Verriegelungselementes 73. Diese Baueinheit kann auch sehr einfach bei bestehenden Förderfahrzeugen 4 nachgerüstet werden.

Wie in Fig. 4 ersichtlich, liegt die erste Montageplatte 69 mit ihrer Führungsfläche 71 und die zweite Montageplatte 70 mit ihrer Führungsfläche 71 am Längsträger 56 auf parallel zueinander verlaufenden ersten Führungsflächen 101 auf. Die Führungsflächen 101 verlaufen in Fahrrichtung 55 parallel zur Aufnahmeebene 67. Die Vorspannkraft der Montageplatten 69, 70 auf den Längsträger ist dabei so gewählt, dass die Lagereinheit 68 bzw. die Verriegelungsvorrichtung 54 relativ zum Grundrahmen 51 zwischen den Anschlagelementen 63 in Fahrrichtung 55 positionierbar ist. Die Lagereinheit 68 bzw. die Verriegelungsvorrichtung 54 ist ferner quer zur Fahrrichtung 55 entlang dem Längsträger 56 seitlich geführt. Dabei können die Führungsblöcke 80 mit einer Führungsfläche 102 (Fig. 5) am Längsträger 56 auf einer Außenseite gegen eine erste Führungsfläche 103 anliegen. Zusätzlich sind die Befestigungsmittel 75 mit einer Führungshülse 104 versehen, welche am Längsträger 56 auf einer Innenseite gegen eine zweite Führungsfläche 103 anliegen. Die Lagereinheit 68 ist demnach über eine erste Führungsanordnung in senkrechter Richtung auf die Aufnahmeebene 67 und über eine zweite Führungsanordnung quer zur Fahrrichtung 55 entlang dem Längsträger 56 geführt.

Wie in den Fig. 2, 3, 7 und 8 dargestellt, umfasst das Regallager 2 in jeder Regalebene 11 entlang der Regalgasse 8 im Bereich der ersten Regallagerseite 9 und/oder im Bereich der zweiten Regallagerseite 10 jeweils Halterungen 105. Die Halterungen 105 sind über Befestigungsmittel 106, insbesondere Schrauben mit den Führungsschienen 14a, 14b; 17a, 17b verbunden. Ist nur eine einzige Verriegelungsvorrichtung 54 am Förderfahrzeug 4 vorgesehen, so sind die Halterungen 105 entweder an den linken Führungsschienen 14a; 17a oder rechten Führungsschienen 14b; 17b befestigt. Ist die Verriegelungsvorrichtung 54 am Förderfahrzeug 4 an der Frontseite und/oder Heckseite angeordnet, so können sich die Halterungen 105 in jeder Regalebene 11 im Bereich der ersten Regallagerseite 9 und/oder im Bereich der zweiten Regallagerseite 105 zwischen den Führungsschienen 14a, 14b; 17a, 17b durchgehend erstrecken und sind sodann die Halterungen 10 über Befestigungsmittel 106, insbesondere Schrauben mit beiden Führungsschienen 14a, 14b; 17a, 17b je Regalebene 11 verbunden.

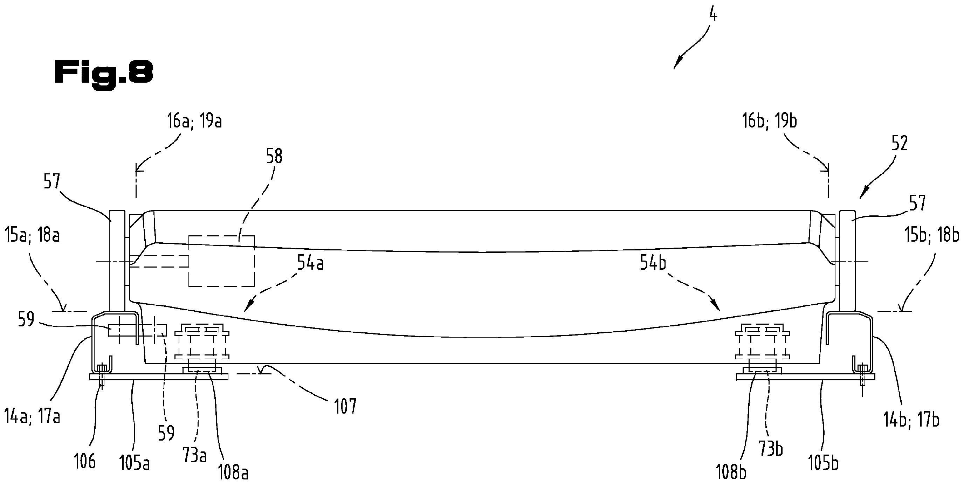

Die Halterungen 105 je Regalebene 11 liegen im Wesentlichen innerhalb einer Montageebene 107 und sind an ihnen jeweils ein vorzugsweise ortsfestes Verriegelungselement 108 zum bedarfsweisen Blockieren der Fahrbewegung des Förderfahrzeuges 4 angeordnet. Das Verriegelungselement 108a, 108b ist derart angeordnet und ausgebildet, dass auf der Fahrbewegung des Förderfahrzeuges 4 in Fahrrichtung 55 das Verriegelungselement 73 der Verriegelungsvorrichtung(en) 54a, 54b in der Verriegelungsstellung am Verriegelungselement 108a, 108b aufläuft, wie in Fig. 8 schematisch dargestellt. Das Verriegelungselement 108a, 108b bildet eine Anschlagnocke, die verhindert, dass das Förderfahrzeug 4 auf der Fahrbewegung entlang der ersten Führungsbahn und gegebenenfalls zweiten Führungsbahn der jeweiligen Regalebene 11 nicht bis über das Führungsbahnende hinweg verfahren wird. Der Fahrweg ist quasi durch die im Bereich der ersten Regallagerseite 9 und/oder im Bereich der zweiten Regallagerseite 10 vorgesehenen Verriegelungselemente 108a, 108b begrenzbar.

Soll das Verriegelungselement 108a, 108b überfahren bzw. das Förderfahrzeug 4 bis über das Führungsbahnende hinweg verfahren werden, so wird das Verriegelungselement 73 der Verriegelungsvorrichtung(en) 54a, 54b durch Betätigen des Stellantriebes 98 derart in die Ausgangsstellung bewegt, dass die Verriegelungselemente 73, 108a, 108b nicht miteinander in Eingriff gelangen. Dies ist erforderlich, wenn das Förderfahrzeug 4 zwischen dem Regallager 2 und der Aufnahmevorrichtung 38 bewegt werden soll, wie in Fig. 9 dargestellt.

Wie in Fig. 2 und 3 ersichtlich, kann auch die Aufnahmevorrichtung 38 der Hebevorrichtung 6 mit zumindest einer Halterung 109 ausgestattet werden, welche über Befestigungsmittel, insbesondere Schrauben mit dem Aufnahmegestell 42 oder den Führungsschienen 46a, 46b verbunden ist.

Ist nur eine einzige Verriegelungsvorrichtung 54 am Förderfahrzeug 4 vorgesehen, so ist an der Halterung 109 entweder nahe der rechten Führungsschiene 46a oder nahe der linken Führungsschienen 46b ein vorzugsweise ortsfestes Verriegelungselement 110 zum bedarfsweisen Blockieren der Fahrbewegung des Förderfahrzeuges 4 angeordnet. Ist die Verriegelungsvorrichtung 54 am Förderfahrzeug 4 an der Frontseite und/oder Heckseite angeordnet, so ist an der Halterung 109 zwischen der rechten Führungsschiene 46a und linken Führungsschienen 46b ein Verriegelungselement 110 zum bedarfsweisen Blockieren der Fahrbewegung des Förderfahrzeuges 4 bzw. Arretierung einer Aufnahmeposition des Förderfahrzeuges 4 auf der Aufnahmevorrichtung 38 angeordnet. Sind zwei Verriegelungsvorrichtungen 54 am Förderfahrzeug 4 vorgesehen, so umfasst auch die Aufnahmevorrichtung 38 zwei Verriegelungselemente 110a, 110b, wie in Fig. 2 eingetragen.

Das Verriegelungselement 110a, 110b ist nach gezeigter Ausführung durch in Fahrrichtung des Einebenenregalbediengerätes mit gegenseitigem Abstand angeordnete Arretiernocken gebildet, wobei das Verriegelungselement 73 zwischen die Arretiernocken eingreift, wenn sich das Verriegelungselement 73 in der Verriegelungsstellung befindet. Dadurch wird das Förderfahrzeug 4 während der Hubbewegung der Aufnahmevorrichtung 38 in seiner Aufnahmeposition auf der Führungsbahn (Fig. 3) relativ zur dritten Führungsbahn arretiert und damit eine Fahrbewegung gestoppt. Andererseits kann das Verriegelungselement 110a, 110b auch durch eine komplementär zum ersten Verriegelungselement 73 ausgebildete Aufnahmebohrung gebildet sein. Die Verriegelungselemente 73, 110a bzw. 73, 110b befinden dich in der Verriegelungsstellung in formschlüssigem Eingriff. Dabei kann auch eine Zentrierung des Förderfahrzeuges 4 relativ gegenüber Aufnahmevorrichtung 38 erfolgen.

Dadurch kann das Förderfahrzeug 4 in seiner Aufnahmeposition auf der Führungsbahn gesichert gehalten bzw. arretiert werden, sodass auch bei sehr dynamischen Verstellbewegungen der Aufnahmevorrichtung 38 keine Gefahr besteht, dass sich das Förderfahrzeug 4 aus seiner gesicherten Aufnahmeposition wegbewegt.

Soll das Verriegelungselement 110a, 110b überfahren bzw. das Förderfahrzeug 4 wieder von der Aufnahmevorrichtung 38 an das Regallager 2 umgesetzt werden, so wird das Verriegelungselement 73 der Verriegelungsvorrichtung(en) 54a, 54b durch Betätigen des(r) Stellantriebe(s) 98 derart in die Ausgangsstellung bewegt, dass das(die) Verriegelungselement(e) 73, 110a, 110b nicht miteinander in Eingriff gelangen.

Der Ordnung halber sei abschließend darauf hingewiesen, dass zum besseren Verständnis des Aufbaus des Regallagersystems 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Regallagersystem | 41 | |
| 2 | Regallager | 42 | Aufnahmegestell |
| 3 | Ladegut | 43 | Führungsorgan |
| 4 | Förderfahrzeug | 44 | Hubantrieb |
| 5 | Ladegut-Hebevorrichtung | 45 | Zugmittel |
| | | | |
| 6 | Förderfahrzeug-Hebevorrichtung | 46 | Führungsschiene |
| 7 | Lagerregal | 47 | Höhenführungsbahn |
| 8 | Regalgasse | 48 | Seitenführungsbahn |
| 9 | Regallagerseite | 49 | Fördertechnikebene |
| 10 | Regallagerseite | 50 | Fördervorrichtung |
| | | | |
| 11 | Regalebene | 51 | Grundrahmen |
| 12 | Stellplatz | 52 | Fahrantrieb |
| 13 | Pufferplatz | 53 | Lastaufnahmevorrichtung |
| 14 | Führungsschiene | 54 | Verriegelungsvorrichtung |
| 15 | Höhenführungsbahn | 55 | Fahrrichtung |
| | | | |
| 16 | Seitenführungsbahn | 56 | Längsträger |
| 17 | Führungsschiene | 57 | Laufrad |
| 18 | Höhenführungsbahn | 58 | Antriebsmotor |
| 19 | Seitenführungsbahn | 59 | Führungsrolle |
| 20 | | 60 | Teleskoparm |
| | | | |
| 21 | | 61 | Mitnehmer |
| 22 | | 62 | Anschlagvorrichtung |
| 23 | | 63 | Anschlagelement |
| 24 | | 64 | Haltebügel |
| 25 | | 65 | Befestigungsmittel |
| | | | |
| 26 | | 66 | Anschlagfläche |
| 27 | Aufnahmevorrichtung | 67 | Aufnahmeebene |
| 28 | Transportvorrichtung | 68 | Lagereinheit |
| 29 | Hubantrieb | 69 | Montageplatte |
| 30 | Hubrahmen | 70 | Montageplatte |
| | | | |
| 31 | Mast | 71 | Führungsfläche |
| 32 | Führung | 72 | Ausnehmung |
| 33 | Führungsrad | 73 | Verriegelungselement |
| 34 | Fördertechnikebene | 74 | Bohrung |
| 35 | Fördervorrichtung | 75 | Bohrung |
| | | | |
| 36 | Führungsrahmen | 76 | Befestigungsmittel |
| 37 | Hubrahmen | 77 | Befestigungsmittel |
| 38 | Aufnahmevorrichtung | 78 | Ausnehmung |
| 39 | Rahmenteil | 79 | Trägerelement |
| 40 | Traverse | 80 | Führungsblock |
| 81 | Führungsfläche | | |
| 82 | Bohrung | | |
| 83 | Auflageschulter | | |
| 84 | Kanal | | |
| 85 | Anschlussdraht | | |
| | | | |
| 86 | Spule | | |
| 87 | Anschlagelement | | |
| 88 | Führungsbolzen | | |
| 89 | Befestigungsmittel | | |
| 90 | Aufnahmeelement | | |
| | | | |
| 91 | Auflagefläche | | |
| 92 | Oberseite | | |
| 93 | Bohrung | | |
| 94 | Anschlaggehäuse | | |
| 95 | Führungsfläche | | |
| | | | |
| 96 | Führungsfläche | | |
| 97 | Befestigungsmittel | | |
| 98 | Stellantrieb | | |
| 99 | Verstellrichtung | | |
| 100 | Klemme | | |
| | | | |
| 101 | Führungsfläche | | |
| 102 | Führungsfläche | | |
| 103 | Führungsfläche | | |
| 104 | Führungshülse | | |
| 105 | Halterung | | |
| | | | |
| 106 | Befestigungsmittel | | |
| 107 | Montageebene | | |
| 108 | Verriegelungselement | | |
| 109 | Halterung | | |
| 110 | Verriegelungselement | | |

## Patentansprüche

1. Einebenenregalbediengerät (4) zum Ein- bzw. Auslagern von Ladegütern (3) in ein bzw. aus einem Regallager (2), welches einen Grundrahmen (51) umfasst und über einen Fahrantrieb (52) entlang einer Führungsbahn (14a, 14b; 17a, 17b; 46a, 46b) in Fahrrichtung (55) bewegbar ist, wobei das Einebenenregalbediengerät (4) mit zumindest einer Verriegelungsvorrichtung (54) ausgestattet ist, welche ein durch einen Stellantrieb (98) relativ zum Grundrahmen (51) verstellbares Verriegelungselement (73) umfasst, um mit einem nahe der Führungsbahn (14a, 14b; 17a, 17b; 46a, 46b) angeordneten, vorzugsweise als stationärer Anschlag ausgebildeten Verriegelungselement (108, 110) zum Blockieren einer Fahrbewegung bzw. Arretieren einer Aufnahmeposition des Einebenenregalbediengerätes (4) in Eingriff gebracht zu werden, **dadurch gekennzeichnet, dass** am Grundrahmen (51) eine Anschlagvorrichtung (62) für die Verriegelungsvorrichtung (54) befestigt ist, welche ein erstes Anschlagelement (63) umfasst, wobei die Verriegelungsvorrichtung (54) über eine Lagereinheit (68) relativ zum ersten Anschlagelement (63) in Fahrrichtung (55) verschiebbar am Grundrahmen gelagert ist.

2. Einebenenregalbediengerät nach Anspruch 1, **dadurch gekennzeichnet, dass** die Verriegelungsvorrichtung (54) eine Lagervorrichtung (80) zur Lagerung des Verriegelungselementes (73) umfasst.

3. Einebenenregalbediengerät nach Anspruch 2, **dadurch gekennzeichnet, dass** die Lagervorrichtung einen ersten Führungsblock (80) und einen zweiten Führungsblock (80) umfasst und das Verriegelungselement (73) zwischen einander zugewandten Führungsflächen (81) gelagert ist.

4. Einebenenregalbediengerät nach Anspruch 1 oder 2, **dadurch gekennzeichnet, dass** die Verriegelungsvorrichtung (54) eine Führungsvorrichtung (88) zur Führung des Verriegelungselementes (73) umfasst.

5. Einebenenregalbediengerät nach Anspruch 4, **dadurch gekennzeichnet, dass** die Führungsvorrichtung einen Führungsbolzen (88) und das Verriegelungselement (73) ein mit einer Bohrung (93) versehenes Anschlaggehäuse (94) umfassen, wobei das Anschlaggehäuse (94) durch den Stellantrieb (98) axial verschiebbar auf dem Führungsbolzen (88) gelagert ist.

6. Einebenenregalbediengerät nach Anspruch 5, **dadurch gekennzeichnet, dass** die Verriegelungsvorrichtung (54) eine Lagereinheit (68) umfasst und der Führungsbolzen (88) über ein Aufnahmeelement (90) an der Lagereinheit (68) gelagert ist.

7. Einebenenregalbediengerät nach einem der Ansprüche 1 bis 6, **dadurch gekennzeichnet, dass** die Verriegelungsvorrichtung (54) eine Lagereinheit (68) mit einer Stützvorrichtung (83) und das Verriegelungselement (73) ein Trägerelement (79) umfassen, wobei die Stützvorrichtung (83) und das Trägerelement (79) in Verstellrichtung (99) des Verriegelungselementes (73) einander gegenüberliegen und derart ausgebildet sind, dass in einer Verriegelungsstellung des Verriegelungselementes (73) das Trägerelement (79) an der Stützvorrichtung (83) abstützbar ist.

8. Einebenenregalbediengerät nach einem der Ansprüche 1 bis 7, **dadurch gekennzeichnet, dass** die Anschlagvorrichtung (62) ein zweites Anschlagelement (63) umfasst.

9. Einebenenregalbediengerät nach Anspruch 8, **dadurch gekennzeichnet, dass** die Verriegelungsvorrichtung (54) über eine Lagereinheit (68) zwischen den Anschlagelementen (63) in Fahrrichtung (55) verschiebbar am Grundrahmen (51) gelagert ist.

10. Einebenenregalbediengerät nach Anspruch 9, **dadurch gekennzeichnet, dass** die Anschlagelemente (63) durch Dämpfungselemente gebildet sind.

11. Einebenenregalbediengerät nach einem der Ansprüche 1 bis 10, **dadurch gekennzeichnet, dass** die Verriegelungsvorrichtung (54) eine Lagereinheit (68) umfasst, welche mit einander koaxial gegenüberliegenden Anschlagelementen (87) ausgestattet ist.

12. Einebenenregalbediengerät nach Anspruch 11, **dadurch gekennzeichnet, dass** die Anschlagelemente (87) durch Dämpfungselemente gebildet sind.

13. Einebenenregalbediengerät nach einem der Ansprüche 1 bis 12, **dadurch gekennzeichnet, dass** die Verriegelungsvorrichtung (54) unterhalb einer vom Grundrahmen (51) ausgebildeten Aufnahmeebene (67) angeordnet ist.

14. Hebevorrichtung (6) mit einem Einebenenregalbediengerät (4) zum Ein- bzw. Auslagern von Ladegütern (3) in ein bzw. aus einem Regallager (2), wobei die Hebevorrichtung (6) einen Führungsrahmen (36) und eine an diesem relativ zum Regallager (2) bewegbare Aufnahmevorrichtung (38) zum Transport des Einebenenregalbediengerätes (4) zwischen Regalebenen (11) des Regallagers (2) umfasst, **dadurch gekennzeichnet, dass** das Einebenenregalbediengerät (4) nach einem der vorhergehenden Ansprüche ausgebildet ist und die Aufnahmevorrichtung (38) zumindest ein Verriegelungselement (110) zum Blockieren einer Fahrbewegung bzw. Arretieren einer Aufnahmeposition des Einebenenregalbediengerätes (4) umfasst.

15. Regallagersystem (1) mit einem Regallager (2) mit benachbart zueinander angeordneten Lagerregalen (7a, 7b), zwischen denen sich zumindest eine Regalgasse (8) von einer ersten Regallagerseite (9) zu einer zweiten Regallagerseite (10) erstreckt und welche in übereinander liegenden Regalebenen (11) Stellplätze (12) für Ladegüter (3) aufweisen, und in den Regalebenen (11) entlang der Regalgasse (8) verlaufenden Führungsbahnen (14a, 14b) und zumindest einem entlang der Führungsbahnen (14a, 14b) verfahrbaren, autonomen Einebenenregalbediengerät (4) zum Transport der Ladegüter (3) zu den Stellplätzen (12), **dadurch gekennzeichnet, dass** das Einebenenregalbediengerät (4) nach einem der Ansprüche 1 bis 13 ausgebildet ist und dass in zumindest einem der gegenüberliegenden Endabschnitte der Führungsbahnen (14a, 14b) auf zumindest einer Halterung (105) je Regalebene (11) gelagert ein Verriegelungselement (108) zum Blockieren einer Fahrbewegung des Einebenenregalbediengerätes (4) angeordnet ist.

## Claims

1. A single-level storage and retrieval unit (4) for storing articles (3) in a rack store (2) and retrieving them therefrom, which comprises a basic frame (51) and is movable along a guide path (14a, 14b; 17a, 17b; 46a, 46b) via a travelling drive (52) in a direction of travel (55), wherein the single-level storage and retrieval unit (4) is equipped with at least one locking device (54), which comprises a locking element (73) which can be adjusted relative to the basic frame (51) by an actuator (98), in order to be brought into engagement with a locking element (108, 110) arranged close to the guide path (14a, 14b; 17a, 17b; 46a, 46b), preferably constructed as a stationary stop, for blocking a travelling movement or respectively for arresting a receiving position of the single-level storage and retrieval unit (4), **characterized in that** a stop device (62) for the locking device (54) is fastened to the basic frame (51), which stop device (62) comprises a first stop element (63), wherein the locking device (54) is mounted on the basic frame displaceably via a bearing unit (68) relative to the first stop element (63) in the direction of travel (55).

2. The single-level storage and retrieval unit according to claim 1, **characterized in that** the locking device (54) comprises a bearing device (80) for the bearing of the locking element (73).

3. The single-level storage and retrieval unit according to claim 2, **characterized in that** the bearing device comprises a first guide block (80) and a second guide block (80), and the locking element (73) is mounted between guide surfaces (81) which face one another.

4. The single-level storage and retrieval unit according to claim 1 or 2, **characterized in that** the locking device (54) comprises a guide device (88) for guiding the locking element (73).

5. The single-level storage and retrieval unit according to claim 4, **characterized in that** the guide device comprises a guide pin (88) and the locking element (73) comprises a stop housing (94) provided with a bore (93), wherein the stop housing (94) is mounted on the guide pin (88) in an axially displaceable manner by the actuator (98).

6. The single-level storage and retrieval unit according to claim 5, **characterized in that** the locking device (54) comprises a bearing unit (68), and the guide pin (88) is mounted on the bearing unit (68) via a receiving element (90).

7. The single-level storage and retrieval unit according to one of claims 1 to 6, **characterized in that** the locking device (54) comprises a bearing unit (68) with a support device (83) and the locking element (73) comprises a carrier element (79), wherein the support device (83) and the carrier element (79) lie opposite one another in adjustment direction (99) of the locking element (73) and are constructed such that in a locking position of the locking element (73), the carrier element (79) is able to be supported on the support device (83).

8. The single-level storage and retrieval unit according to one of claims 1 to 7, **characterized in that** the stop device (62) comprises a second stop element (63).

9. The single-level storage and retrieval unit according to claim 8, **characterized in that** the locking device (54) is mounted on the basic frame (51) displaceably via a bearing unit (68) between the stop elements (63) in the direction of travel (55).

10. The single-level storage and retrieval unit according to claim 9, **characterized in that** the stop elements (63) are formed by damping elements.

11. The single-level storage and retrieval unit according to one of claims 1 to 10, **characterized in that** the locking device (54) comprises a bearing unit (68), which is equipped with stop elements (87) lying coaxially opposite one another.

12. The single-level storage and retrieval unit according to claim 11, **characterized in that** the stop elements (87) are formed by damping elements.

13. The single-level storage and retrieval unit according to one of claims 1 to 12, **characterized in that** the locking device (54) is arranged beneath a receiving level (67) formed by the basic frame (51).

14. A lifting device (6) with a single-level storage and retrieval unit (4) for storing articles (3) in a rack store (2) and retrieving them therefrom, wherein the lifting device (6) comprises a guide frame (36) and a receiving device (38), movable thereon relative to the rack store (2), for the transport of the single-level storage and retrieval unit (4) between rack levels (11) of the rack store (2), **characterized in that** the single-level storage and retrieval unit (4) is constructed according to one of the preceding claims, and the receiving device (38) comprises at least one locking element (110) for blocking a travelling movement or respectively for arresting a receiving position of the single-level storage and retrieval unit (4).

15. A rack store system (1) with a rack store (2) with storage racks (7a, 7b) arranged adjacent to one another, between which at least one rack aisle (8) extends from a first rack store side (9) to a second rack store side (10) and which have storing positions (12) in rack levels (11) lying over one another, for articles (3), and guide paths (14a, 14b) running in the rack levels (11) along the rack aisle (8), and at least one autonomous single-level storage and retrieval unit (4), movable along the guide paths (14a, 14b), for the transport of the articles (3) to the storing positions (12), **characterized in that** the single-level storage and retrieval unit (4) is constructed according to one of claims 1 to 13 and that in at least one of the end sections of the guide paths (14a, 14b), lying opposite one another, mounted on at least one mounting (105) per rack level (11) a locking element (108) is arranged for blocking a travelling movement of the single-level storage and retrieval unit (4).

## Revendications

1. Appareil de commande de rayonnage à un niveau (4) pour entrer et sortir des marchandises (3) respectivement dans et hors d'un rayonnage (2), qui comprend un cadre de base (51) et qui peut être déplacé par un mécanisme d'entraînement (52) le long d'un rail de guidage (14a, 14b ; 17a, 17b ; 46a, 46b) dans une direction de déplacement (55), dans lequel l'appareil de commande de rayonnage à un niveau (4) est équipé d'un dispositif de verrouillage (54) qui comprend un élément de verrouillage (73) pouvant être réglé par un actionneur (98) relativement au cadre de base (51), pour être mis en prise avec un élément de verrouillage (108, 110) agencé à proximité du rail de guidage (14a, 14b ; 17a, 17b ; 46a, 46b), de préférence formé sous la forme d'une butée stationnaire, pour respectivement bloquer un mouvement de déplacement ou arrêter une position de réception de l'appareil de commande de rayonnage à un niveau (4), **caractérisé en ce qu'**un dispositif de butée (62) pour le dispositif de verrouillage (54) est fixé sur le cadre de base (51), qui comprend un premier élément de butée (63), de sorte que le dispositif de verrouillage (54) est monté sur le cadre de base au moyen d'une unité de palier (68), pouvant être déplacé par rapport au premier élément de butée (63) dans la direction de déplacement (55).

2. Appareil de commande de rayonnage à un niveau selon la revendication 1, **caractérisé en ce que** le dispositif de verrouillage (54) comprend un dispositif de stockage (80) pour le stockage de l'élément de verrouillage (73).

3. Appareil de commande de rayonnage à un niveau selon la revendication 2, **caractérisé en ce que** le dispositif de stockage comprend un premier bloc de guidage (80) et un second bloc de guidage (80), et l'élément de verrouillage (73) est monté entre des surfaces de guidage opposées (81).

4. Appareil de commande de rayonnage à un niveau selon la revendication 1 ou 2, **caractérisé en ce que** le dispositif de verrouillage (54) comprend un dispositif de guidage (88) pour guider l'élément de verrouillage (73).

5. Appareil de commande de rayonnage à un niveau selon la revendication 4, **caractérisé en ce que** le dispositif de guidage comprend un goujon de guidage (88) et l'élément de verrouillage (73) comprend un logement de butée (94) prévu avec un alésage (93), dans lequel le logement de butée (94) est monté sur le goujon de guidage (88) pouvant être déplacé axialement par l'actionneur (98).

6. Appareil de commande de rayonnage à un niveau selon la revendication 5, **caractérisé en ce que** le dispositif de verrouillage (54) comprend une unité de palier (68), et le goujon de guidage (88) est monté sur l'unité de palier (68) par l'intermédiaire d'un élément de réception (90).

7. Appareil de commande de rayonnage à un niveau selon l'une quelconque des revendications 1 à 6, **caractérisé en ce que** le dispositif de verrouillage (54) comprend une unité de palier (68) avec un dispositif de support (83) et l'élément de verrouillage (73) comprend un élément de support (79), dans lequel le dispositif de support (83) et l'élément porteur (79), dans la direction de réglage (99) de l'élément de verrouillage (73), sont formés opposés l'un à l'autre et de telle sorte que dans une position de verrouillage de l'élément de verrouillage (73), l'élément porteur (79) peut être mis en appui sur le dispositif de support (83).

8. Appareil de commande de rayonnage à un niveau selon l'une quelconque des revendications 1 à 7, **caractérisé en ce que** le dispositif de butée (62) comprend un deuxième élément de butée (63).

9. Appareil de commande de rayonnage à un niveau selon la revendication 8, **caractérisé en ce que** le dispositif de verrouillage (54), par l'intermédiaire d'une unité de palier (68), est monté sur le châssis de base (51) entre les éléments de butée (63) pouvant être déplacé dans la direction de déplacement (55).

10. Appareil de commande de rayonnage à un niveau selon la revendication 9, **caractérisé en ce que** les éléments de butée (63) sont formés par des éléments d'amortissement.

11. Appareil de commande de rayonnage à un niveau selon l'une quelconque des revendications 1 à 10, **caractérisé en ce que** le dispositif de verrouillage (54) comprend une unité de palier (68) qui est équipée d'éléments de butée (87) coaxiaux mutuellement opposés.

12. Appareil de commande de rayonnage à un niveau selon la revendication 11, **caractérisé en ce que** les éléments de butée (87) sont formés par des éléments d'amortissement.

13. Appareil de commande de rayonnage à un niveau selon l'une des revendications 1 à 12, **caractérisé en ce que** le dispositif de verrouillage (54) est agencé au-dessous d'un plan de réception (67) formé par le châssis de base (51).

14. Dispositif de levage (6) ayant un appareil de commande de rayonnage à un niveau (4) pour entrer et sortir des marchandises (3) respectivement dans et hors d'un rayonnage de stockage (2), dans lequel le dispositif de levage (6) comprend un cadre de guidage (36) et un dispositif de réception (38) sur celui-ci, pouvant être déplacé par rapport au rayonnage de stockage (2) pour le transport de l'appareil de commande de rayonnage à un niveau (4) entre des plans de rayonnage (11) du rayonnage de stockage (2), **caractérisé en ce que** l'appareil de commande de rayonnage à un niveau (4) est réalisé selon l'une quelconque des revendications précédentes, et le dispositif de réception (38) comprend au moins un élément de verrouillage (110) pour respectivement bloquer un mouvement de déplacement ou arrêter une position de réception de l'appareil de commande de rayonnage à un niveau (4).

15. Système de rayonnage de stockage (1) avec un rayonnage de stockage (2) ayant des rayons de stockage (7a, 7b) adjacents les uns aux autres, entre lesquels s'étend au moins une allée (8) d'un premier côté de rayonnage de stockage (9) vers un second côté de rayonnage de stockage (10), et qui comprend des emplacements (12) destinés à des marchandises (3) dans des plans de rayonnage (11) les uns au-dessus des autres, et des rails de guidage (14a, 14b) s'étendant le long de l'allée de rayonnage (8) dans les plans de rayonnage (11), et au moins un appareil de commande de rayonnage à un niveau (4) autonome pouvant être déplacé le long des rails de guidage (14a, 14b) pour le chargement des marchandises (3) jusqu'aux emplacements (12), **caractérisé en ce que** l'appareil de commande de rayonnage à un niveau (4) est formé selon l'une quelconque des revendications 1 à 13, et **en ce que** dans au moins une des parties d'extrémité opposées des rails de guidage (14a, 14b) est agencée un élément de verrouillage (108) monté sur au moins un support (105) par plan de rayonnage (11), pour bloquer un mouvement de déplacement de l'appareil de commande de rayonnage à un niveau (4).
